# EUROPÄISCHE PATENTSCHRIFT

(11) **EP 1 401 892 B1**
(45) Veröffentlichungstag und Bekanntmachung des Hinweises auf die Patenterteilung: **26.09.2007**
(21) Anmeldenummer: 02743088.3
(22) Anmeldetag: 24.05.2002
(51) Int. Cl.: C08F 12/32, C09D 7/12

(54) **FUNKTIONALE ORGANISCHE PULVER, VERFAHREN ZU IHRER HERSTELLUNG UND IHRE VERWENDUNG**
FUNCTIONAL ORGANIC POWDERS, METHODS FOR PRODUCTION AND USE THEREOF
POUDRES ORGANIQUES FONCTIONNELLES, PROCEDE POUR LEUR PRODUCTION ET LEUR UTILISATION

(30) Priorität: 01.06.2001 DE 10126650
(43) Veröffentlichungstag der Anmeldung: 31.03.2004
(73) Patentinhaber: BASF Coatings AG, 48165 Münster (DE)
(72) Erfinder: BREMSER, Wolfgang, 48165 Münster (DE); STOCKBRINK, Ute, 48282 Emsdetten (DE)
(74) Vertreter: Leifert & Steffan
(86) Internationale Anmeldenummer: PCT/EP2002/005701
(87) Internationale Veröffentlichungsnummer: WO 2002/098933

(56) Entgegenhaltungen:
- DE-A- 19 930 067
- DE-A- 19 930 665

## Beschreibung

Die vorliegende Erfindung betrifft die neuartige Verwendung eines Copolymerisats und seiner wäßrigen Dispersion für die Herstellung von neuen organischen Pulvern , deren Oberfläche funktionelle Gruppen trägt. Außerdem betrifft die vorliegende Erfindung neue organische Pulver, deren Oberfläche funktionelle Gruppen trägt. Des weiteren betrifft die vorliegende Erfindung ein neues Verfahren zur Herstellung von organischen, auf der Oberfläche funktionelle Gruppen fragenden Pulvern. Nicht zuletzt betrifft die vorliegende Erfindung die Verwendung der organischen auf der Oberfläche funktionelle Gruppen fragenden Pulver als Füllstoffe in Beschichtungsstoffen, Klebstoffen und Dichtungsmassen.

Pulverförmige organische Füllstoffe aus Textil, Cellulose, Polyethylen, Polypropylen, Polyamid, Polyacrylnitril oder Polyester, sind seit langem bekannt (vgl. Römpp Lexikon Lacke und Druckfarben, Georg Thieme Verlag, Stuttgart, New York, 1998, »Füllstoffe«, Seiten 250 bis 252). Nachteilig ist, daß diese organischen Füllstoffe weitgehend inerte Oberflächen aufweisen, die häufig nur geringfügig mit den sie umgebenden Matrices wechselwirken. Dies kann u.U. nachteilige Folgen für die mechanische Festigkeit, Durchlässigkeit und chemische Beständigkeit von gefüllerten Beschichtungen, Klebschichten und Dichtungen haben. Zwar ist es möglich, die organischen Füllstoffe zu funktionalisieren, dies stellt aber einen zusätzlichen Aufwand dar, der die funktionalisierten Füllstoffe insbesondere für den Einsatz in Massenprodukten unwirtschaftlich machen kann.

Die Verwendung von Dispersionen von Copolymerisaten, die durch ein- oder mehrstufige radikalische Copolymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;

in wäßrigen Medien herstellbar sind, als Bindemittel in Beschichtungsstoffen, insbesondere Wasserbasislacken (vgl. die deutsche Patentanmeldung DE 199 30 665 A1), Füllern und Steinschlagschutzgrundierungen (vgl. die deutsche Patentanmeldung DE 199 30 067 A1) und Klarlacken (vgl. die deutsche Patentanmeldung DE 199 30 664 A1), ist bekannt. Ihre Verwendung als zur Herstellung von organischen, auf der Oberfläche funktionelle Gruppen tragenden Füllstoffen wird in den Patentanmeldungen nicht beschrieben.

In der nicht vorveröffentlichten deutschen Patentanmeldung DE 100 18 078.1 wird die Verwendung der vorstehend aufgeführten Copolymerisate und ihrer Dispersionen für die Herstellung von Formmassen und Verfahren zur Herstellung von Formkörpern beschrieben. Die Formmassen und Formkörper werden durch die Umsetzung der Dispersionen der Copolymerisate mit Aminoplastharzen gebildet. Die Verwendung der Copolymerisate zur Herstellung von organischen Pulvern, deren Oberfläche funktionelle Gruppen trägt, wird in der deutschen Patentanmeldung nicht beschrieben.

Aufgabe der vorliegenden Erfindung ist es eine weitere neue Verwendung für die vorstehend aufgeführten Copolymerisate des Standes der Technik zu finden.

Außardem ist es die Aufgabe der vorliegenden Erfindung neue organische, auf der Oberfläche funktionelle Gruppen tragende Pulver zu finden, die sich in einfacher Weise herstellen und in vielfältiger Weise funktionalisieren lassen, stabil gegenüber organischen Lösemitteln sind und sehr breit eingesetzt werden können.

Desweiteren ist es die Aufgabe der vorliegenden Erfindung neue organische, auf der Oberfläche funktionelle Gruppen tragende Füllstoffe zu "finden, die ebenfalls dieses Elgenschaftsptofil haben.

Desweiteren ist es die Aufgabe der vorliegenden Erfindung ein neues Verfahren zur Herstellung von organischen , auf der Oberfläche funktionelle Gruppen tragende Pulvern zu finden, das sich in einfacher Weise durchführen läßt und mit dem die organischen Pulver in vielfältiger Weise funktionalisiert werden können, so daß sie sehr breit, insbesondere als Füllstoffe, anwendbar sind.

Nicht zuletzt ist es die Aufgabe der vorliegenden Erfindung neue Beschichtungsstoffe, Klebstoffe und Dichtungsmassen mit verbesserten anwendungstechnischen Eigenschaften zu finden, die organische Füllstoffe, die auf der Oberfläche funktionelle Gruppen tragen, enthalten.

Demgemäß wurde die neuartige Verwendung eines Copolymerisats (A), herstellbar durch ein- oder mehrstufige radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte AlkylCycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;

In einem wäßrigen oder einem organischen Medium, für die Herstellung von organischen Pulvern, deren Oberfläche funktionelle Gruppen trägt, gefunden.

Im folgenden wird die neue Verwendung des Copolymerisats (A) als "erfindungsgemäße Verwendung" bezeichnet.

Außerdem wurden die neuen organischen, auf der Oberfläche funktionelle Gruppen tragenden Pulver gefunden, die
(I) durch die Umsetzung von
   (A) mindestens einer primären und/oder sekundären wäßrigen Dipsersion mindestens eines Copolymerisats (A), herstellbar durch die ein- oder mehrstufige radikalische Copolymerisation in einem wäßrigen oder einem organischen Medium von
      a) mindestens einem olefinisch ungesättigten Monomer und
      b) mindestens einem vom olefinisch ungesättigten Monomer (a) verschiedenen olefinisch ungesättigten Monomer der allgemeinen Formel I

         **R¹R²C=CR³R⁴** (I),

         worin die Reste R¹, R², R³ und R⁴ jeweils unabhängig voneinander für Wasserstoffatome oder substituierte oder unsubstituierte Alkyl-, Cycloalkyl-, Alkylcycloalkyl- , Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen:
   (B) mit mindestens einem Aminoplastharz und
(II) anschließender Zerkleinerung des resultierenden Feststoffs herstellbar sind.

Im folgenden werden die neuen organischen, auf der Oberfläche funktionelle Gruppen tragenden Pulver als "erfindungsgemäße Pulver" bezeichnet.

Darüber hinaus wurde das neue Verfahren zur Herstellung von organischen Pulvern, deren Oberfläche funktionelle Gruppen trägt, gefunden, bei dem man
(I) ein reaktives Stoffgemisch, enthaltend
   (A) die wäßrige Dipsersion mindestens eines Copolymerisats (A), herstellbar durch radikalische Copolymerisation in einem wäßrigen oder organischen Medium von
      (a) mindestens einem olefinisch ungesättigten Monomer mit mindestens einer aminoplastharzreaktiven funktionellen Gruppe und
      (b) mindestens einem vom olefinisch ungesättigten Monomer (a) verschiedenen olefinisch ungesättigten Monomer der allgemeinen Formel I

         **R¹R²C=CR³R⁴** (I),

         worin die Reste R¹, R², R³ und R⁴ jeweils unabhängig voneinander für Wasserstoffatome oder substituierte oder unsubstituierte Alkyl-, Cycloalkyl-, Alkylcycloalkyl- , Cycloalkylalkyl-, Aryl-, Alkylaryl-, Cycloalkytaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
      und
   (B) mindestens ein Aminoplastharz;
      herstellt,
(II) das reaktive Stoffgemisch in einer geeignete Hohlform zu einem Feststoff härtet,
(III) Hohlform und Feststoff voneinander trennt und
(IV) den Feststoffe zerkleinert.

Im folgenden wird das neue Verfahren zur Herstellung organischer, auf der Oberfläche funktionelle Gruppen tragender Pulver als, "erfindungsgemäßes Verfahren" bezeichnet.

Nicht zuletzt wurde die neue Verwendung der erfindungsgemäßen Pulver als Füllstoffe gefunden.

Weitere erfindungsgemäße Verwendungen und Gegenstände gehen aus der Beschreibung hervor.

Im Hinblick auf den Stand der Technik war es überraschend und für den Fachmann nicht vorhersehbar, daß die Aufgabe, die der vorliegenden Erfindung zugrunde lag, mit Hilfe der erfindungsgemäßen Verwendung, der erfindungsgemäßen Pulver und des erfindungsgemäßen Verfahrens gelöst werden konnte.

Dies war um so mehr überraschend, als thermisch härtbare Stoffe, wie beispielsweise thermisch härtbare Beschichtungsstoffe auf der Basis von Aminoplastharzen, üblicherweise bei Temperaturen oberhalb 100°C gehärtet werden müssen, um inneralb einer kurzen Prozeßzeit vollständig gehärtete, duroplastische Beschichtungen zu liefern. Im vorliegenden Falle konnten aber überraschenderweise duroplastische unlösliche Feststoffe bereits bei Raumtemperatur erzeugt werden. Diese duroplastischen Feststoffe ließen sich problemlos zerkleinern und pulverisieren, wodurch die erfindungsgemäßen Pulver resultierten.

Da die Copolymerisate (A) in ihrer stofflichen Zusammensetzung und Funktionalisierung mit funktionellen Gruppen überraschend breit variiert werden konnten, resultierten erfindungsgemäße Pulver, die eine ebenso breite Anwendbarkeit haben.

Die Funktionalisierung der erfindungsgemäßen Pulver ermöglichte auch die überraschend breite stoffliche Modifizierung ihrer Oberfläche zur Anpassung ihrer anwendungstechnischen Eigenschaften an spezielle Matrices.

Insbesondere konnten sie in ihrer Verwendung als Füllstoffe über die Funktonalisierung der erfindungsgemäß zu verwendenden Copolymerisate (A) und die Auswahl geeigneter Zusatzstoffe, insbesondere Pigmente, hervorragend an die unterschiedlichsten physikalisch und chemischen Matrices, insbesondere an Beschichtungsstoffe, Klebstoffe und Dichtungsmassen aller Art sowie an die hieraus hergestellten Beschichtungen, Klebschichten und Dichtungen angepasst werden.

Die betreffenden erfindungsgemäßen Beschichtungsstoffe, Klebstoffe und Dichtungsmassen waren daher besonders lager- und transportstabil und neigten auch nicht zur Entmischung insbesondere der erfindungsgemäßen Füllstoffe unter extremen und/oder häufig wechselnden klimatischen Bedingungen.

Die erfindungsgemäßen Füllstoffe konnten somit nicht nur zur Verbesserung der mechanischen Eigenschaften und der energiedissipativen Eigenschaften der erfindungsgemäßen Beschichtungen, Klebschichtungen und Dichtungen verwendet werden, sondern auch beispielsweise für die Farb- und/oder Effektgebung.

Die Oberfläche der erfindungsgemäßen Pulver trägt funktionelle Gruppen, die der Oberfläche der erfindungsgemäßen Pulver bestimmte Eigenschaften, wie Hydrophilie oder Hydrophobie, Acidität oder Basizität oder eine erhöhte Reaktivität verleihen.

Der erste wesentliche Bestandteil der erfindungsgemäßen Pulver ist mindestens ein Copolmerisat (A). Erfindungsgemäß wird das Copolymerisat (A) durch radikalische (Co)Polymerisation mindestens eines olefinisch ungesättigten Monomeren (a) und mindestens eines olefinisch ungesättigten Monomeren (b), welches von dem Monomeren (a) verschieden ist, hergestellt

Als Monomere (a) kommen die unterschiedlichsten olefinisch ungesättigten Monomeren in Betracht Erfindungsgemäß ist es von Vorteil, mindestens ein Monomer (a) mit mindestens einer, insbesondere einer, aminoplastharzreaktiven funktionellen Gruppe zu verwenden. Beispiele geeigneter aminoplastharzreaktiver funktioneller Gruppen sind Thio-, Hydroxyl-, Amino, N-Methylolamino- N-Alkoxymethylamino-, imino-, Carbamat- und/oder Allophanatgruppen, inbesondere Hydroxylgruppen.

Beispiele geeigneter Monomere (a) sind die Monomeren (a1) wie
- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl- , 4-Hydroxybutylacrylat, -methacrylat, -ethacrylat, -crotonat, - maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, - monomethacrylat, -monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder -cycloalkylestern;
- olefinisch ungesättigte Alkohole wie Allylalkohol;
- Polyole wie Trimethylolpropanmono- oder diallylether oder Pentaerythritmono-, -di- oder -triallylether;
- Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalente Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylacrylat, Aminoethylmethacrylat, Allylamin oder N-Methyliminoethylacrylat;
- N,N-Di(methoxymethyl)aminoethylacrylat oder -methacrylat oder N,N-Di(butoxymethyl)aminopropylacrylat oder -methacrylat;
- hydroxylgruppenhaltige Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a3);
- N-methylol- und N-methoxyalkylsubstituierte (Meth)Acrylsäureamide, wie N-Methyl-, N-Methylol-, N,N-Dimethylol-, N-Methoxymethyl-, N,N-Di(methoxymethyl)-, N-Ethoxymethyl- und/oder N,N-Di(ethoxymethyl)-(meth)acrylsäureamid; und/oder
- Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A- 4,126,747, US-A- 4,279,833 oder US-A-4,340,497 beschrieben.

Höherfunktionelle Monomere (a1) werden im allgemeinen in untergeordneten Mengen eingesetzt. Im Rahmen der vorliegenden Erfindung sind unter untergeordneten Mengen an höherfunkfionellen Monomeren solche Mengen zu verstehen, welche nicht zur Vernetzung oder Gelierung der Copolymerisate führen, es sei denn, man will gezielt vernetzte polymere Mikroteilchen herstellen.

Die Monomeren (a1) können als die alleinigen Monomeren eingesetzt werden. Erfindungsgemäß ist es indes von Vorteil, noch weitere olefisch ungesättigte Monomere (a) zu verwenden, um das Eigenschaftsprofil der erfindungsgemäß zu verwendenden Copolymerisate (A) in vorteilhafter Weise zu variieren und es dem jeweiligen Verwendungszweck der erfindungsgemäßen Pulver anzupassen.

Beispiel geeigneter weiterer Monomere (a) sind
(a2) im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder - tetra(meth)acrylat enthalten. Hinsichtlich der höherfunktionellen Monomeren (a1) gilt das vorstehend Gesagte.
(a3) Monomere, welche mindestens eine Säuregruppe, die in die entsprechende Säureaniongruppe überführbar ist, pro Molekül tragen, wie Acrylsäure, beta-Carboxyethylacrylat Methacrylsäure, Ethacrylsäure, Crotonsäure, Maleinsäure, Fumarsäure, Itaconsäure, beta-Carboxyethylacrylat, alpha-Methylvinylbenzoesäure (alle Isomere), oder Vinylbenzoesäure (alle Isomere); olefinisch ungesättigte Sulfon- oder Phosphonsäuren oder deren Teilester wie p-Vinylbenzsolsulfonsäure; oder Maleinsäuremono(meth)-acryloyloxyethylester, Bemsteinsäuremono(meth)acryloyloxyethylester oder Phthalsäuremono(meth)acryloyloxyethylester.
(a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
(a5) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
(a6) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, und/oder N,N-Cyclohexylmethyl-(meth)acrylsäureamid.
(a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure oder Allylglycidylether.
(a8) Vinylaromatische Kohlenwasserstoffe wie Styrol, alpha-Alkylstyrole, insbesondere alpha-Methylstyrol und/oder Vinyltoluol, N,N-Diethylaminostyrol (alle Isomere) und/oder N,N-Diethylamino-alpha-methylstyrol (alle Isomere).
(a9) Nitrile wie Acrylnitril und/oder Methacrylnitril.
(a10) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
(a11) Allylverbindungen, insbesondere Allylether und -ester wie Allylmethyl-, -ethyl-, -propyl- oder -butylether oder Allylacetat, - propionat oder -butyrat, und/oder
(a12) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.

Erfindungsgemäß resultieren ganz besondere Vorteile, wenn als zusätzliche Monomere (a) die Monomeren (a2) und/oder (a3) verwendet werden.

Erfindungsgemäß werden als Monomere (b) Verbindungen der allgemeinen Formel I verwendet.

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl- , -Propyl- oder -Butylcyclohex-1-yl.

Beispiele geeigneter Arylreste sind Phenyl, Naphthyl oder Biphenylyl, vorzugsweise Phenyl und Naphthyl und insbesondere Phenyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, - Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans-Sfilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate (A), insbesondere der Acrylatcopolymerisate (A), ist Diphenylethylen von ganz besonderem Vorteil und wird deshalb erfindungsgemäß ganz besonders bevorzugt verwendet.

Die erfindungsgemäß zu verwendenden Monomere (a) und (b) werden in Gegenwart mindestens eines radikalischen Initiators miteinander zu dem Copolymerisat (A) umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,5 bis 50 Gew.%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Vorzugsweise wird die radikalische Copolymerisation in üblichen und bekanntn Vorrichtungen, insbesondere Rührkessel oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Die zwei- oder mehrstufige radikalische Copolymerisation bzw. Blockmischpolymerisation wird in einem wäßrigen oder einem organischen Medium durchgeführt.

Wird die Copolymerisation in einem organischen Medium durchgeführt, wird die resultierende organische Lösung oder Dispersion des Co- oder Blockmischpolymerisats oder der Copolymerisate (A) in einem wäßrigen Medium dispergiert, wodurch eine Sekundärdispersion (A) resultiert. Gegebenenfalls werden die hierin enthaltenen organischen Lösemittel abdestilliert.

Wird die Copolymerisation in einem wäßrigen Medium durchgeführt, resultieren wäßrige Primärdispersionen (A), die als solche direkt für die Herstellung der erfindungsgemäßen Pulver eingesetzt werden können.

Vorzugsweise wird die Copolymerisation in einem wäßrigen Medium durchgeführt.

Das wäßrige Medium enthält im wesentlichen Wasser. Hierbei kann das wäßrige Medium in untergeordneten Mengen die nachstehend beschriebenen Zusatzstoffe (C) und/oder sonstige gelöste feste, flüssige oder gasförmige organische und/oder anorganische, nieder- und/oder hochmolekulare Stoffe, insbesondere oberflächenaktive Substanzen, enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Di- und/oder Triethanolamin.

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150°C, ganz besonders bevorzugt 70 bis 120 °C und insbesondere 80 bis 110 °C gewählt wird.

Bei Verwendung besonders leicht flüchtiger Monomeren (a) und/oder (b) kann die Copolymerisation auch unter Druck, vorzugsweise unter 1,5 bis 3.000 bar, besonders bevorzugt 5 bis 1.500 und insbesondere 10 bis 1.000 bar mit durchgeführt werden.

Hinsichtlich der Molekulargewichtsverteilung ist das Copolymerisat (A) keinerlei Beschränkungen unterworfen. Vorteilhafterweise wird aber die die Copolymerisation so geführt, daß eine Molekulargewichtsverteilung Mw/Mn gemessen mit Gelpermeationschromatographie unter Verwendung von Polystyrol als Standard von ≤ 4, besonders bevorzugt ≤ 2 und insbesondere ≤ 1,5 sowie in einzelnen Fällen auch ≤ 1,3 resultiert. Die Molekulargewichte der Copolymerisate (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Das durch die Copolymerisation resultierende Copolymerisat (A) fällt als Gemisch mit dem wäßrigen Medium in der Regel in der Form einer Dispersion (A) an. Ihr Feststoffegehalt kann sehr breit variieren; vorzugsweise liegt er bei 5 bis 60, bevorzugt 10 bis 55, besonders bevorzugt 15 bis 50, ganz besonders bevorzugt 20 bis 45 und insbesondere 25 bis 40 Gew.-%, jeweils bezogen auf die Dispersion (A).

Zwar kann die Dispersion (A) direkt zur Herstellung der erfindungsgemäßen Pulver verwendet werden. Erfindungsgemäß ist es jedoch von Vorteil, die Dispersion (A) bzw. das hierin enthaltene Copolymerisat (A) als Makroinitiator für die weitere Umsetzung mit mindestens einem weiteren Monomeren (a) in mindestens einer weiteren, insbesondere einer weiteren, d.h. zweiten, Stufe (ii) zu verwenden, wobei die Copolymerisaton oder die Blockmischpolymerisation vorzugsweise in der Abwesenheit eines radikalischen Initiators durchgeführt wird.

Die weitere Umsetzung gemäß der Stufe (ii) wird vorzugsweise unter den üblichen Bedingungen für eine radikalische Polymerisation durchgeführt, wobei geeignete Zusatzstoffe (C) anwesend sein können. Dabei können die Stufen (i) von (ii) sowohl räumlich als auch zeitlich getrennt voneinander durchgeführt werden. Darüber hinaus können aber die Stufen (i) um (ii) auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und der gewünschten Eigenschaften umgesetzt, wonach mindestens ein weiteres Monomer (a) hinzugegeben und radikalisch polymerisiert wird. In einer weiteren Ausführungsform werden von Anfang an mindestens zwei Monomere (a) eingesetzt, wobei das Monomer (b) zunächst mit einem der mindestens zwei Monomeren (a) reagiert und anschließend das resultierende Umsetzungsprodukt (A) oberhalb eines bestimmten Molekulargewichts auch mit dem weiteren Monomeren (a) reagiert.

Je nach Reaktionsführung ist es dabei erfindungsgemäß möglich, an den Endgruppen funktionalisierte Polymere, Block- oder Multiblock- sowie Gradienten(co)polymere, sternförmige Polymere, Pfropfcopolymere und verzweigte (Co)Polymere als Copolymerisate (A) herzustellen.

Copolymerisate (A), die in der vorstehend beschriebenen mehrstufigen Verfahrensweise hergestellt werden, liefern besonders vorteilhafte erfindungsgemäße Pulver, weswegen sie erfindungsgemäß besonders bevorzugt eingesetzt werden.

Auch der Feststoffegehalt der in mehrstufiger Verfahrensweise hergestellten Dispersionen (A) kann sehr breit variieren; vorzugsweise liegt er bei 10 bis 70, bevorzugt 15 bis 65, besonders bevorzugt 20 bis 60, ganz besonders bevorzugt 25 bis 55 und insbesondere 30 bis 50 Gew.-%, jeweils bezogen auf die Dipsersion (A).

Der Gehalt der erfindungsgemäßen Pulver an den in einstufiger oder in mehrstufiger Verfahrensweise hergestellten Copolymerisaten (A) kann ebenfalls sehr breit variieren und richtet sich nach den Erfordernissen des Einzelfalls. Vorzugsweise liegt der Gehalt bei 5 bis 60, bevorzugt 10 bis 55, besonders bevorzugt 15 bis 50, ganz besonders bevorzugt 20 bis 45 und insbesondere 25 bis 40 Gew.-%, jeweils bezogen auf das erfindungsgemäße Pulver.

Der zweite wesentliche Bestandteil der erfindungsgemäßen Pulver ist mindestens ein Aminoplastharz (B). Hierbei kann jedes für thermisch härtbare Lacke geeignete Aminoplastharz oder eine Mischung aus solchen Aminoplastharzen verwendet werden. Insbesondere sind Melaminharze, Guanaminharze, Benzoguanaminharze oder Harnstoffharze, speziell Melaminharze, verwendbar. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A und EP 0 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Auch der Gehalt der erfindungsgemäßen Formmassen an Aminoplastharzen (B) kann sehr breit variieren. Er richtet sich vor allem nach der Anzahl und der Reaktivität der in den Copolymerisaten (A) vorhandenen aminoplastharzreaktiven funktionellen Gruppen. Vorzugsweise liegt der Gehalt bei 1 bis 40, bevorzugt 2 bis 35, besonders bevorzugt 3 bis 30, ganz besonders bevorzugt 4 bis 25 und insbesondere 5 bis 20 Gew.-%, jeweils bezogen auf das erfindungsgemäße Pulver.

Darüber hinaus können die erfindungsgemäßen Pulver noch mindestens einen üblichen und bekannten Zusatzstoff (C) in den jeweils üblichen und bekannten, wirksamen Mengen enthalten.

Vorzugsweise wird als Zusatzstoff (C) mindestens ein Pigment (C) verwendet, das vor, während oder nach, insbesondere nach der Herstellung der Copolymerisate (A) den Dispersionen (A) zugesetzt werden kann.

Vorzugsweise werden die Pigmente (C) aus der Gruppe, bestehend aus farb- und/oder effektgebenden, fluoreszierenden, elektrisch leitfähigen und magnetisch abschirmenden Pigmenten, Metallpulvern, organischen und anorganischen, transparenten und opaken Füllstoffen und Nanopartikeln ausgewählt.

Der Gehalt der erfindungsgemäßen Pulver an den Pigmenten (C) kann breit variieren. Vorzugsweise wird der Gehalts so gewählt, daß das Mengenverhältnis von Pigmenten (C) zu Copolymerisaten (A) (Pigment-Bindemittel-Verhältnis) bei 1 : 10 bis 5 : 1, bevorzugt 1 : 8 bis 4,5 : 1, besonders bevorzugt 1 : 6 bis 4 : 1, ganz besonders bevorzugt 1 : 4 bis 3,5 : 1 und insbesondere 1 : 2 bis 3 : 1 liegt.

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz-bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Beispiele geeigneter transparenter Füllstoffe sind solche auf der Basis von Siliziumdioxid, Aluminiumoxid oder Zirkoniumoxid.

Geeignete Nanopartikel werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Ganz besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet.

Anstelle der vorstehend beschriebenen Pigmente (C) oder zusätzlich zu diesen können die erfindungsgemäßen Pulver noch mindestens einen weiteren Zusatzstoffe (C) enthalten.

Beispiele geeigneter weiterer Zusatzstoffe (C) sind molekulardispers lösliche Farbstoffe, Lichtschutzmittel, wie UV-Absorber und reversible Radikalfänger (HALS); Antioxidantien; niedrig- und hochsiedende ("lange") organische Lösemittel; Entlüftungsmittel; Netzmittel; Emulgatoren; Slipadditive; Polymerisationsinhibitoren; Katalysatoren für die Vernetzung; thermolabile radikalische Initiatoren; thermisch härtbare Reaktiwerdünner; Haftvermittler; Verlaufmittel; filmbildende Hilfsmittel; Rheologiehilfsmittel (Verdicker und strukturviskose Sag control agents; SCA); Flammschutzmittel; Korrosionsinhibitoren; Rieselhilfen; Wachse; Sikkative; Biozide und/oder Mattierungsmittel; wie sie beispielsweise in dem Lehrbuch »Lackadditive« von Johan Bieleman, Wiley-VCH, Weinheim, New York, 1998, oder in der deutschen Patentanmeldung DE 199 14 896 A1, Spalte 14, Seite 26, bis Spalte 15, Zeile 46, im Detail beschrieben werden.

Weitere Beispiele für geeignete Zusatzstoffe (C) werden in dem Lehrbuch »Lackadditive« von Johan Bieleman, Wiley-VCH, Weinheim, New York, 1998, im Detail beschrieben.

Die Herstellung der erfindungsgemäßen Pulver erfolgt vorzugsweise durch Vermischen und Homogenisieren der Dispersionen (A) mit den Aminoplastharzen (B) sowie gegebenenfalls den Zusatzstoffen (C) in geeigneten Mischaggregaten wie Rührkessel, Rührwerksmühlen, Ultraturrax, In-line-Dissolver, statische Mischer, Zahnkranzdispergatoren, Druckentspannungsdüsen und/oder Microfluidizer.

Die resultierenden reaktiven Stoffgemische werden in geeigneten Hohlformen hergestellt oder sie werden vorzugsweise sofort nach ihrer Herstellung in Hohlformen gegossen, wobei die Herstellung und die Handhabung der reaktiven Stoffgemische keine besonderen Vorsichtsmaßnahmen erfordern.

Die Hohlformen können aus beliebigen Materialen bestehen, welche vorzugsweise nicht von Wasser oder wäßrigen Medien angegriffen werden oder für Wasser durchlässig sind. Beispiele geeigneter Materialien sind thermostabile Stoffe, wie Metalle, Glas, Keramik, natürliche Mineralien, Beton oder Zement, oder vergleichsweise thermolabile Materialien wie Kunststoffe, Gummi, Leder, Holz, Textilien oder Papier. Vorzugsweise werden Materialien verwendet, die sich in einfacher Weise von den resultierenden Feststoffen entfernen lassen. Besonders bevorzugt werden Hohlformen verwendet, aus denen sich die Feststoffe entfernen lassen, ohne die Hohlformen dabei zu zerstören. Beispiele geeigneter Hohlformen dieser Art sind Schalen, Bänder oder Wannen.

Hiernach läßt man die reaktiven Stoffgemische aushärten. Die Aushärtung kann durch erhöhte Temperatur, erniedrigte Luftfeuchte und/oder aktinische Strahlung wie nahes Infrarot, sichtbares Licht, UV-Strahlung oder Elektronenstrahlung beschleunigt werden. Vorzugsweise erfolgt die Aushärtung ohne die zusätzlichen Maßnahmen bei Raumtemperatur.

Die Dauer der Aushärtung kann sehr breit variieren und je nach Zusammensetzung 20 s bis mehrere Tage, insbesondere ein Tag bis zwei Tage, betragen.

Nach der Aushärtung werden die resultierenden Feststoffe ohne Probleme von den Hohlformen getrennt

Vor der Weiterverarbeitung können die Feststoffe noch getrocknet werden oder sie können sofort zerkleinert werden.

Vorzugsweise werden sie dabei zunächst grob zerkleinert, wobei die üblichen und bekannten Verfahren und Vorrichtungen, wie Zerschneiden, Zertrümmern oder Zerspanen, eingesetzt werden. Der grob zerkleinerte Feststoff wird pulverisiert, wobei die üblichen und bekannten Verfahren und Vorrichtungen wie Schlagmühlen, Kugelmühlen, Labormühlen und Rührwerksmühlen angewandt werden können. Die resultierenden erfindungsgemäßen Pulver können anschließend noch gesichtet werden, um vorteilhafte Teilchengrößenverteilungen einzustellen.

Die erfindungsgemäßen Pulver können den unterschiedlichsten Verwendungen, beispielsweise als Dämmaterialien, Verpackungsmaterialien oder Zusatzstoffe zu Zement oder Beton, zugeführt werden. Vorzugsweise werden sie als Füllstoffe in Beschichtungsstoffen, Klebstoffen und Dichtungsmassen verwendet.

Die erfindungsgemäßen Beschichtungsstoffe, Klebstoffe und Dichtungsmassen, die die erfindungsgemäßen Füllstoffe enthalten, können physikalisch, thermisch, mit aktinischer Strahlung, insbesondere UV-Strahlung, oder thermisch und mit aktinischer Strahlung gehärtet werden. Sie können als Ein- oder Zwei- oder Mehrkomponentensysteme, als wäßrige Systeme, als konventionelle Systeme auf der Basis organischer Lösemittel, als im wesentlichen wasserfreie und lösemittelfreie Pulver, als Pulversuspensionen (Pulverslurries) oder als im wesentlichen wasserfreie und lösemittelfreie flüssige Systeme (100%-Systeme) vorliegen. Die erfindungsgemäßen Füllstoffe sind somit auf dem Gebiet der Beschichtungsstoffe, Klebstoffe und Dichtungsmassen praktisch uneingeschränkt verwendbar.

Ganz besonders bevorzugt werden die erfindungsgemäßen Füllstoffe in den Beschichtungsstoffen auf der Basis von Copolymerisaten (A) verwendet, wie sie aus den deutschen Patentanmeldungen DE 199 30 665 A1, DE 199 30 067 A1 und DE 199 30 664 A1 bekannt sind.

Als Substrate, die mit den erfindungsgemäßen Beschichtungsstoffen, Klebstoffen und Dichtungsmassen lackiert, verklebt oder abgedichtet werden können, kommen praktisch alle Substrate, die durch eine Härtung der hierauf befindlichen Beschichtungsstoffe, Klebstoffe und Dichtungsmassen unter Anwendung von Hitze und/oder aktinischer Strahlung nicht geschädigt werden, in Betracht. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Die erfindungsgemäßen Beschichtungsstoffe, Klebstoffe und Dichtungsmassen kommen insbesondere für das Lackieren, das Verkleben und das Abdichten von Kraftfahrzeugkarosserien, von Bauwerken im Innen- und Außenbereich oder von Türen, Fenstern und Möbeln in Betracht.

Im Rahmen der industriellen Lackierung, inklusive Coil Coating, Container Coating und die Imprägnierung und/oder Beschichtung elektrotechnischer Bauteile, eignen sie sich hervorragend für das Lackieren, das Verkleben oder das Abdichten praktisch aller Teile und Gegenstände des privaten oder industriellen Gebrauchs, wie weiße Ware, inclusive Haushaltsgeräte, Heizkessel oder Radiatoren; Kleinteile aus Metall, inclusive Schrauben, Muttern Radkappen oder Felgen; Emballagen oder elektrotechnische Bauteile, inclusive Motorwicklungen oder Transformatorwicklungen.

Die aus den erfindungsgemäßen Beschichtungsstoffen hergestellten Beschichtungen weisen hervorragende anwendungstechnische Eigenschaften, insbesondere eine sehr gute Beständigkeit gegenüber mechanischer Einwirkung wie Steinschlag auf.

Die aus den erfindungsgemäßen Klebstoffen hergestellten Klebschichten weisen eine hohe Klebkraft auf, die auch unter klimatisch extremen Bedingungen und/oder bei häufig wechselnden Temperaturen nicht verlorengeht.

Die aus den erfindungsgemäßen Dichtungsmassen hergestellten Dichtungen dichten die betreffenden Substrate auch in der Gegenwart aggressiver Stoffe auf Dauer hervorragend ab.

Die Substrate, die mit erfindungsgemäßen Beschichtungen lackiert, mit erfindungsgemäßen Klebschichten verklebt und/oder mit erfindungsgemäßen Dichtungen abgedichtet sind, weisen daher zahlreiche technische und wirtschaftliche Vorteile, insbesondere eine lange Gebrauchsdauer, auf, was sie für Hersteller und Anwender besonders attraktiv macht.

### Beispiele

### Herstellbeispiel 1

### Die Herstellung einer Dispersion eines Copolymerisats (A)

In einem Stahlreaktor, wie er üblicherweise für die Herstellung von Dispersionen verwendet wird, ausgestattet mit einem Rührer, einem Rückflußkühler und 3 Zulaufgefäßen wurden 1.591,1 Gewichtsteile VE-Wasser vorgelegt und auf 80°C erhitzt. In dem ersten Zulaufgefäß wurden 308,2 Gewichtsteile Acrylsäure, 555,2 Gewichtsteile Methylmethacrylat und 45,2 Gewichtsteile Diphenylethylen vorgelegt. In dem zweiten Zulaufgefäß wurden 300,1 Gewichtsteile 25 prozentige Ammoniaklösung vorgelegt. In dem dritten Zulaufgefäß wurden 159 Gewichtsteile VE-Wasser und 68,2 Gewichtsteilen Ammoniumperoxodisulfat vorgelegt. Unter intensivem Rühren der Vorlage im Stahlreaktor wurden die drei Zuläufe gleichzeitig gestartet. Der erste und zweite Zulauf wurden innerhalb von vier Stunden zudosiert. Der dritte Zulauf wurde innerhalb von viereinhalb Stunden Stunden zudosiert. Das resultierende Reaktionsgemisch wurde während vier Stunden bei 90 °C gehalten und anschließend auf unter 40 °C abgekühlt und durch einen 100µm-GAF-Beutel abfiltriert. Die resultierende Dispersion wies einen Feststoffegehalt von 32 bis 34 Gew.-% (1 Stunde, 130 °C) und einen Gehalt an freien Monomeren von weniger als 0,2 Gew.-% (bestimmt durch Gaschromatographie) auf.

Die Dispersion (A) wurde für die Herstellung des Blockmischpolymerisats (A) verwendet.

### Herstellbeispiel 2

### Die Herstellung der Dispersion eines Blockmischpolymerisats (A)

In einem Stahlreaktor, wie er üblicherweise für die Herstellung von Dispersionen verwendet wird, ausgestattet mit einem Rührer, einem Rückflußkühler und einem Zulaufgefäß, wurden 1.361,7 Gewichtsteile VE-Wasser und 240 Gewichtsteile der Dispersion (A) gemäß Herstellbeispiel 1 vorgelegt und unter Rühren auf 80 °C erhitzt. Hiernach wurde aus dem Zulaufgefäß innerhalb von sechs Stunden eine Mischung aus 103,6 Gewichtsteile n-Butylmethacrylat, 103,6 Gewichtsteile Styrol, 103,6 Gewichtsteile Hydroxyethylmethacrylat und 725,6 Gewichtsteile 2-Ethylhexylmethacrylat hinzu dosiert. Die resultierende Reaktionsmischung wurde während zwei Stunden bei 90 °C gerührt. Anschließend wurde die resultierende Dispersion unter 40 °C abgekühlt und durch einen 50µm-GAF-Beutel abfiltriert. Die Dispersion (A) wies einen Feststoffegehalt von 41 bis 42 Gew.-% (1 Stunde, 130 °C) und einem Gehalt an freien Monomeren von weniger als 0,2 Gew.% (bestimmt durch Gaschromatographie) auf.

### Beispiel 1

### Die Herstellung eines erfindungsgemäßen Pulvers

100 Gewichtsteile der Dispersion (A) des Herstellbeispiels 2 und 15 Gewichtsteile eines üblichen Melaminharzes (Luwipal ® 73 der Firma BASF Aktiengesellschaft) wurden unter intensivem Rühren vermischt und homogenisiert. Die reaktive Stoffrnischung wurde in flache Schalen gegossen, worin sie während 24 bis 48 Stunden aushärtete. Die resultierenden Feststoffe wurden aus den Schalen genommen und zunächst grob und dann in einer Schlagmühle weiter zerkleinert.

### Beispiel 2

### Die Herstellung einer Pigmentpaste, enthaltend einen erfindungsgemäßen Füllstoff

Für die Herstellung der erfindungsgemäßen Pigmentpaste wurden die folgenden Bestandteile in der angegebenen Reihenfolge vermischt und homogenisiert:
- 670 Gewichtsteile der Dispersion (A) des Herstellbeispiels 2,
- 4,8 Gewichtsteile Agitan ® 281 (Entschäumungsmittel der Firma Münzing),
- 12 Gewichtsteile Additol ® WW 395 (handelsübliches Verlaufmittel der Firma Solutia),
- 72 Gewichtsteile des erfindungsgemäßen Pulvers gemäß Beispiel 1,
- 45,6 Gewichtsteile Flammruß 101 (Firma Degussa) und
- 394,8 Gewichtsteile Bariumsulfat-Pigment (Blanc Fixe ® Super F der Firma Sachtleben Chemie).

Die resultierende Pigmentpaste wurde in einer Kugelmühle auf eine Hegmann-Feinheit von 10 µm gemahlen. Die Pigmentpaste war lagerstabil.

### Beispiel 3

### Die Herstellung einer erfindungsgemäßen Füllstoff-Slurry

506,6 Gewichtsteile der Dispersion (A) des Herstellbeispiels 2, 3,4 Gewichtsteile Agitan ® 281 und 340 Gewichtsteile des erfindungsgemäßen Pulvers gemäß Beispiel 1 wurden vermischt und mit einem Dissolver homogenisiert. Die resultierende Slurry wurde in einer Kugelmühle auf eine Hegmann-Feinheit von 10 µm gemahlen. Die Slurry war lagerstabil.

### Beispiel 4

### Die Herstellung einer erfindungsgemäßen pigmentierten Füllstoff-Slurry

Für die Herstellung der pigmentierten Füllstoff-Slurry wurden die folgenden Bestandteile in der angegebenen Reihenfolge miteinander vermischt und homogenisiert:
- 562 Gewichtsteile der Dispersion (A) des Herstellbeispiels 2,
- 4,8 Gewichtsteile Agitan ® 281,
- 12 Gewichtsteile Additol ® XW395,
- 180 Gewichtsteile der Füllstoff-Slurry des Beispiels 3,
- 45,6 Gewichtsteile Flammruß 101 und
- 394,8 Gewichtsteile Bariumsulfat-Pigment.

Die Mischung wurde in einer Kugelmühle auf eine Hegmann-Feinheit von 10 µm gemahlen. Die pigmentierte Füllstoff-Slurry war lagerstabil.

### Beispiel 5

### Die Herstellung eines farbgebenden Lacks

63 Gewichtsteile der Pigmentpaste gemäß Beispiel 2 mit dem erfindungsgemäßen Füllstoff, 92,6 Gewichtsteile der Dispersion (A) gemäß Herstellbeispiel 2 und 15,5 Gewichtsteile des handelsüblichen Additivs Trixene ® BI 7986 der Firma Baxenden Chemicals wurden miteinander vermischt und homogenisiert. Anschließend wurde der erfindungsgemäße Lack auf einen pH-Wert von 8,3 eingestellt. Der Lack wies eine hervorragende Lagerstabilität auf. Vor der Applikation des Lacks wurde die Spritzviskosität durch Zugabe von Wasser eingestellt. Der Lack ließ sich problemlos applizieren.

### Beispiel 6

### Die Herstellung eines farbgebenden Lacks

63 Gewichtsteile der erfindungsgemäßen pigmentierten Füllstoff-Slurry gemäß Beispiel 4, 92,6 Gewichtsteile der Dispersion (A) gemäß Herstellbeispiel 2 und 15,5 Gewichtsteile des handelsüblichen Additivs Trixene ® BI 7986 der Firma Baxenden Chemicals wurden miteinander vermischt und homogenisiert. Anschließend wurde der erfindungsgemäße Lack auf einen pH-Wert von 8,3 eingestellt. Der Lack wies eine hervorragende Lagerstabilität auf. Vor der Applikation des Lacks wurde die Spritzviskosität durch Zugabe von Wasser eingestellt. Der Lack ließ sich problemlos applizieren.

### Beispiele 7 und 8

### Die Herstellung erfindungsgemäßer Lackierungen

Für das Beispiel 7 wurde der erfindungsgemäße Lack des Beispiels 5 und für das Beispiel 8 der erfindungsgemäße Lack des Beispiels 6 verwendet.

Die Lacke wurde pneumatisch auf Stahlbleche, die mit einer kathodisch abgeschiedenen und eingebrannten Elektrotauchlackierung beschichtet waren, in einer Naßschichtdicke appliziert, daß nach dem Trocknen während 10 Minuten bei 80 °C und dem Einbrennen während 20 Minuten bei 155 °C Lackierungen einer Schichtdicke von 33 µm (Beispiel 7) und 30 µm (Beispiel 8) resultierten.

Die Steinschlagbeständigkeit der Lackierungen wurde mit Hilfe der MB-Kugelschußprüfung und dem VDA-Steinschlagtest ermittelt. Es resultierten die folgenden Ergebnisse:

### Beispiel 7: MB-Kugelschuß (mm2): 2/1; VDA (Note): 1,5/1

### Beispiel 8: MB-Kugelschuß (mm2): 3/2; VDA (Note): 1,5/1

Die Ergebnisse untermauern die gute Steinschlagbeständigkeit der erfindungsgemäßen Lackierungen. Darüber hinaus waren die erfindungsgemäßen Lackierungen von hoher optischer Qualität, sehr gutem Verlauf, hoher Chemikalienbeständigkeit, Witterungsbeständigkeit, Härte und Kratzfestigkeit. Außerdem wiesen sie eine hervorragende Haftung zur Elektrotauchlackierung auf.

## Patentansprüche

1. Verwendung eines Copolymerisats (A), herstellbar durch die ein- oder mehrstufige radikalische Copolymerisation von
(a) mindestens einem olefinisch ungesättigten Monomer und
(b) mindestens einem vom olefinisch ungesättigten Monomer (a) verschiedenen olefinisch ungesättigten Monomer mit der allgemeinen Formel I
**R¹R²C=CR³R⁴** (I),
worin die Reste R¹, R², R³ und R⁴ jeweils unabhängig voneinander für Wasserstoffatome oder substitutierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹ R², R³ und R⁴ für substituierte oder unsubstituierte Aryl-, Arylalkyl- oder Arylcycloalkylreste, insbesondere substituierte oder unsubstituierte Arylreste, stehen;
in einem wässrigen oder organischen Medium, zur Herstellung von organischen Pulvern, deren Oberfläche funktionelle Gruppen trägt.

2. Verwendung nach Anspruch 1, **dadurch gekennzeichnet, dass** mindestens ein Monomer (a) mindestens eine aminoplastharzreaküve funktionelle Gruppe enthält_

3. Organische, auf der Oberfläche funktionelle Gruppen tragende Pulver, herstellbar
(I) durch die Umsetzung von
(A) mindestens einer primären und/oder sekundären wässrigen Dispersion mindestens eines Copolymerisats (A), herstellbar durch ein- oder mehrstufige radikalische Copolymerisation in einem wässrigen oder einem organischen Medium von
(a) mindestens einem olefinisch ungesättigten Monomer und
(b) mindestens einem vom olefinisch ungesättigten Monomer (a) verschiedenen olefinisch ungesättigten Monomer mit der allgemeinen Formel I
**R¹R²C=CR³R⁴** (I),
worin die Reste R¹, R², R³ und R⁴ jeweils unabhängig voneinander für Wasserstoffatome oder substitutierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
(B) mit mindestens einem Aminoplastharz und
(II) anschließender Zerkleinerung des resultierenden Feststoffs.

4. Pulver nach Anspruch 3, **dadurch gekennzeichnet, dass** das Copolymerisat (A) erhältlich ist, indem man
(i) mindestens ein Monomer (a) und mindestens ein Monomer (b) in einem wässrigen Medium radikalisch polymerisiert, wonach man
(ii) das resultierende Umsetzungsprodukt mit mindestens einem weiteren Monomer (a) unter radikalischen Bedingungen in Abwesenheit eines radikalischen Initiators umsetzt.

5. Pulver nach Anspruch 3 oder 4, **dadurch gekennzeichnet, dass** mindestens ein Monomer (a) mindestens eine aminoplastharzreaktive funktionelle Gruppe enthält.

6. Pulver nach einem der Ansprüche 3 bis 5, **dadurch gekennzeichnet, dass** es sich bei den Arylresten R¹, R², R³ und/oder R⁴ der Verbindung (b) um Phenyl- oder Naphthylreste, insbesondere Phenylreste handelt.

7. Pulver nach einem der Ansprüche 3 bis 6, **dadurch gekennzeichnet, dass** die Substituenten in den Resten R¹, R², R³ und/oder R⁴ der Verbindung (b) elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl-, Arylalkyl-, und Arylcycloalkylreste; Aryloxy-, Alkyloxy- und Cycloalkyloxyreste; Arylthio-, Alkylthio- und Cycloalkylthioreste; Hydroxylgruppen und/oder primäre, sekundäre und/oder tertiäre Aminogruppen sind.

8. Pulver nach einem der Ansprüche 3 bis 7, **dadurch** gekennezeichnet, dass sie noch mindestens einen Zusatzstoff (C) enthalten.

9. Pulver nach Anspruch 8, **dadurch gekennzeichnet, dass** sie mindestens ein Pigment als Zusatzstoff (C) enthalten.

10. Pulver nach Anspruch 9, **dadurch gekennzeichnet, dass** die Pigmente (C) aus der Gruppe, bestehend aus farb- und/oder effektgebenden, fluoreszierenden, elektrisch leitfähigen und magnetisch abschirmenden Pigmenten, Metallpulvern, organischen und anorganischen, transparenten und opaken Füllstoffen und Nanopartikeln, ausgewählt werden.

11. Verfahren zur Herstellung von organischen, auf der Oberfläche funktionelle Gruppen tragenden Pulvern gemäß einem der Ansprüche 3 bis 10, **dadurch gekennzeichnet, dass** man
(I) ein reaktives Stoffgemisch, enthaltend
(A) die wässrige Dispersion mindestens eines Copolymerisats (A), herstellbar durch radikalische Copolymerisation in einem wässrigen oder organischen Medium von
(a) mindestens einem olefinisch ungesättigten Monomer mit mindestens einer aminoplastharzreaktiven funktionellen Gruppe und
(b) mindestens einem vom olefinisch ungesättigten Monomer (a) verschiedenen olefinisch ungesättigten Monomer mit der allgemeinen Formel I
**R¹R²C=CR³R⁴** (I),
worin die Reste R¹, R², R³ und R⁴ jeweils unabhängig voneinander für Wasserstoffatome oder substitutierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen; und
(B) mindestens ein Aminoplastharz;
herstellt,
(V) das reaktive Stoffgemisch in einer geeigneten Hohlform zu einem Feststoff härtet,
(VI) Hohlform und Feststoff voneinander trennt und den Feststoff zerkleinert.

12. Verwendung der Pulver gemäß einem der Ansprüche 3 bis 10 als Füllstoffe.

13. Verwendung nach Anspruch 12, **dadurch gekennzeichnet, dass** die Füllstoffe in Beschichtungsstoffen, Klebstoffen und Dichtungsmassen verwendet werden.

## Claims

1. Use of a copolymer (A) preparable by the single-stage or multistage free -radical copolymerization of
a) at least one olefinically unsaturated monomer and
b) at least one olefinically unsaturated monomer different than the olefinically unsatur ated monomer (a) and of the general formula I
**R¹R²C=CR³R⁴** (I)
in which the radicals R¹, R², R³ and R⁴, in each case independently of one another, are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R ¹, R², R³ and R⁴ are substituted or unsubstituted aryl, arylalkyl or arylcycloalkyl radicals, especially substituted or unsubstituted aryl radicals
in an aqueous or organic medium for preparing functional organic powders.

2. Use according to Claim 1, **characterized in that** at least one monomer (a) contains at least one functional group that is reactive toward amino resin.

3. Functional organic powder preparable
(I) by reacting
(A) at least one primary and/or secondary aqueous dispersion of at least one copolymer (A) preparable by single -stage or multistage free-radical copolymerization in an aqueous or organic medium of
a) at least on e olefinically unsaturated monomer and
b) at least one olefinically unsaturated monomer different than the olefinically unsaturated monomer (a) and of the general formula I
**R¹R²C=CR³R⁴** (I)
in which the radicals R ¹, R², R³ and R⁴, in each case inde pendently of one another, are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R ¹, R ², R ³ and R⁴ are substituted or unsubstituted aryl, arylalkyl or arylcycloalkyl radicals, especially substituted or unsubstituted aryl radicals
(B) with at least one amino resin,
and
(II) by subsequently comminuting the resultant solid.

4. Powder according to Claim 3, **characterized in that** the copolymer (A) is obtainable by
(i) subjecting at least one monomer (a) and at least one monomer (b) to free -radical polymerization in an aqueous medium, and then
(ii) reacting the resultant reaction product with at least one further monomer (a) under free -radical conditions in the absence of a free -radical initiator.

5. Powder according to Claim 3 or 4, **characterized in that** at least one monomer (a) contains at least one functional group that is reactive toward amino resin.

6. Powder according to any of Claims 3 to 5, **characterized in that** the aryl radicals R ¹, R², R ³ and/or R⁴ of the compound (b) are phenyl or naphthyl radicals, especially phenyl radicals.

7. Powder according to any of Claims 3 to 6, **characterized in that** the substituents in the radicals R¹, R², R³ and/or R⁴ of the compound (b) are electron withdrawing or electron donating atoms or organic radicals, especially halogen atoms, nitrile, nitro, partly or fully halogenated alkyl, cycloalkyl, alkylcycloalkyl, cycloalkylalkyl, aryl, alkylaryl, cycloalkylaryl, arylalkyl and arylcycloalkyl radicals; aryloxy, alkyloxy and cycloalkyloxy radicals; arylthio, alkylthio and cycloalkylthio radicals; hydroxyl groups and/or primary, secondary and/or tertiary amino groups.

8. Powder according to any of Claims 3 to 7, **characterized in that** it further comprises at least one additive (C).

9. Powder according to Claim 8, **characterized in that** it comprises at least one pigment as additive (C).

10. Powder according to Claim 9, **characterized in that** the pigments (C) are selected from the group consisting of color and/or effect pigments, fluorescent pigments, electrically conductive pigments, and magnetically shielding pigments, metal powders, organic and inorganic, transparent and opaque fillers, and nanoparticles.

11. Process for preparing organic functional powder according to any of Claims 3 to 10, **characterized in that**
(I) a reactive composition of matter comprising
(A) the aqueous dispersion of at least one copolymer (A) preparable by free -radical copolymerization in an aqueous or organic medium of
(a) at least one olefinically unsaturated monomer having at least one functional group which is reactive toward amino resin, and
(b) at least one olefinical ly unsaturated monomer different than the olefinically unsaturated monomer (a) and of the general formula I
**R¹R²C=CR³R⁴** (I)
in which the radicals R ¹, R², R³ and R⁴, in each case independently of one another, are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or ar ylcycloalkyl radicals, especially substituted or unsubstituted aryl radicals
and
(B) at least one amino resin, is prepared
(V) the reactive composition of matter is cured to give a solid in an appropriate mold,
(VI) mold is separated from solid, and th e solid is comminuted.

12. Use of the powder according to any of Claims 3 to 10 as fillers.

13. Use according to Claim 12, **characterized in that** the fillers are used in coating materials, adhesives, and sealing compounds.

## Revendications

1. Utilisation d'un copolymère (A), pouvant être obtenu par copolymérisation radicalaire en une ou plusieurs étapes de
(a) au moins un monomère oléfiniquement insaturé et
(b) au moins un monomère oléfiniquement insaturé différent du monomère oléfiniquement insaturé (a) de formule générale I
R¹R²C=CR³R⁴ (I),
dans laquelle les radicaux R¹, R², R³ et R⁴ représentent indépendamment les uns des autres un atome d'hydrogène ou un radical alkyle, cycloalkyle, alkylcycloalkyle, cycloalkylalkyle, aryle, alkylaryle, cycloalkylaryle, arylalkyle ou arylcycloalkyle substitué ou non substitué, à condition qu'au moins deux des variables R¹, R², R³ et R⁴ représentent un radical aryle, arylalkyle ou arylcycloalkyle substitué ou non substitué, notamment un radical aryle substitué ou non substitué
dans un milieu aqueux ou organique, pour la fabrication d'une poudre organique, dont la surface porte des groupements fonctionnels.

2. Utilisation selon la revendication 1, **caractérisée en ce qu'**au moins un monomère (a) comporte au moins un groupement fonctionnel réactif vis-à-vis des résines aminoplastes.

3. Poudre organique dont la surface porte des groupements fonctionnels pouvant être obtenue
(I) par réaction de
(A) au moins une dispersion aqueuse primaire et/ou secondaire d'au moins un copolymère (A), pouvant être obtenu par copolymérisation radicalaire en une ou plusieurs étapes dans un milieu aqueux ou organique de
(a) au moins un monomère oléfiniquement insaturé et
(b) au moins un monomère oléfiniquement insaturé différent du monomère oléfiniquement insaturé (a) de formule générale I
R¹R²C=CR³R⁴ (I),
dans laquelle les radicaux R¹, R², R³ et R⁴ représentent indépendamment les uns des autres un atome d'hydrogène ou un radical alkyle, cycloalkyle, alkylcycloalkyle, cycloalkylalkyle, aryle, alkylaryle, cycloalkylaryle, arylalkyle ou arylcycloalkyle substitué ou non substitué, à condition qu'au moins deux des variables R¹, R², R³ et R⁴ représentent un radical aryle, arylalkyle ou arylcycloalkyle substitué ou non substitué, notamment un radical aryle substitué ou non substitué ;
(B) au moins une résine aminoplaste et
(II) par broyage du corps solide résultant.

4. Poudre selon la revendication 3, **caractérisée en ce que** le copolymère (A) peut être obtenu par
(i) polymérisation radicalaire dans un milieu aqueux d'au moins un monomère (a) et d'au moins un monomère (b), puis
(ii) réaction du produit de réaction résultant avec au moins un monomère (a) supplémentaire dans des conditions radicalaires en absen ce d'un amorceur radicalaire.

5. Poudre selon la revendication 3 ou 4, **caractérisée en ce qu'**au moins un monomère (a) comporte au moins un groupement fonctionnel réactif vis-à-vis des résines aminoplastes.

6. Poudre selon l'une quelconque des revendications 3 à 5, **caractérisée en ce que** les radicaux aryle R¹, R², R³ et/ou R⁴ du composé (b) sont des radicaux phényle ou naphtyle, notamment des radicaux phényle.

7. Poudre selon l'une quelconque des revendications 3 à 6, **caractérisée en ce que** les substituants dans les radicaux R¹, R², R ³ et/ou R ⁴ du composé (b) sont des atomes électronégatifs ou électropositifs ou des radicaux organiques, notamment des atomes d'halogène, des radicaux nitrile, nitro, alkyle halogénés en partie ou en totalité, cycloalkyle, alkylcycloalkyle, cycloalkylalkyle, aryle, alkylaryle, cycloalkylaryle, arylalkyle et arylcycloalkyle ; des radicaux aryloxy, alkyloxy et cycloalkyloxy ; des radicaux arylthio, alkylthio et cycloalkylthio; des groupements hydroxyle et/ou des groupements amino primaires, secondaires et/ou tertiaires.

8. Poudre selon l'une quelconque des revendications 3 à 7, **caractérisée en ce qu'**elle contient également au moins un additif (C).

9. Poudre selon la revendication 8, **caractérisée en ce qu'**elle contient au moins un pigment en tant qu'additif (C).

10. Poudre selon la revendication 9, **caractérisée en ce que** les pigments (C) sont choisis dans le groupe comprenant les pigments donnant une couleur et/ou un effet, les pigments fluorescents, les pigments électriquement conducteurs et les pigments formant un écran magnétique, les poudres métalliques, les matières de remplissage organiques et inorganiques, transparentes et opaques et les nanoparticules.

11. Procédé de fabrication d'une poudre organique dont la surface port e des groupements fonctionnels selon l'une quelconque des revendications 3 à 10, **caractérisé en ce que**
(I) un mélange de matériaux réactif comprenant
(A) la dispersion aqueuse d'au moins un copolymère (A) pouvant être obtenu par copolymérisation radicalaire dans un milieu aqueux ou organique de
(a) au moins un monomère oléfiniquement insaturé comportant au moins un groupement fonctionnel réactif vis-à-vis des résines aminoplastes et
(b) au moins un monomère oléfiniquement insaturé différent du monomère oléfiniquement insaturé (a) de formule générale I
R¹R²C=CR³R⁴ (I),
dans laquelle les radicaux R¹, R², R³ et R ⁴ représentent indépendamment les uns des autres un atome d'hydrogène ou un radical alkyle, cycloalkyle, alkylcycloalkyle, cycloalkylalkyle, aryle, alkylaryle, cycloalkylaryle, arylalkyle ou arylcycloalkyle substitué ou non substitué, à condition qu'au moins deux des variables R¹, R², R³ et R⁴ représentent un radical aryle, arylalkyle ou arylcycloalkyle substitué ou non substitué, notamment un rad ical aryle substitué ou non substitué ; et
(B) au moins une résine aminoplaste ;
est préparé,
(V) le mélange de matériaux réactif est durci en un corps solide dans un moule approprié,
(VI) le moule et le corps solide sont séparés l'un de l'autre et le corps solide est broyé.

12. Utilisation de la poudre selon l'une quelconque des revendications 3 à 10 en tant que matière de remplissage.

13. Utilisation selon la revendication 12, **caractérisée en ce que** la matière de remplissage est utilisée dans des matériaux de revêtement, dans des matériaux adhésifs et dans des matériaux d'étanchéité.
